(19) Europäisches Patentamt
European Patent Office
Office européen des brevets

(11) Publication number: 0 179 211 B1

(12) **EUROPEAN PATENT SPECIFICATION**

(45) Date of publication of patent specification: 12.07.89

(51) Int. Cl.$^4$: C 08 C 19/22

(21) Application number: 85109884.8

(22) Date of filing: 06.08.85

(54) **Rubber compositions modified with sulfenamide derivatives.**

(30) Priority: 21.09.84 US 653655

(43) Date of publication of application: 30.04.86 Bulletin 86/18

(45) Publication of the grant of the patent: 12.07.89 Bulletin 89/28

(84) Designated Contracting States: DE FR GB IT LU

(56) References cited:
US-A-3 007 902

J. VAN ALPHEN: "Rubber chemicals", pages 36-38, D. Reidel publishing co., Dordrecht, NL

(73) Proprietor: THE FIRESTONE TIRE & RUBBER COMPANY
1200 Firestone Parkway
Akron, Ohio 44317 (US)

(72) Inventor: Futamura, Shingo
642 Tanbark Lane
Wadsworth Ohio 44281 (US)

(74) Representative: Kraus, Walter, Dr. et al
Patentanwälte Kraus, Weisert & Partner
Thomas-Wimmer-Ring 15
D-8000 München 22 (DE)

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

EP 0 179 211 B1

**Description**

This invention relates to uncured modified polymer rubbers, to rubber compositions containing said polymer rubbers, and to methods of reducing the hysteresis of rubber compounds and the rolling resistance of tires wherein at least the tread portion of the tire is made from such modified rubbers and cured. More particularly, the invention relates to uncured rubber compositions which comprise the reaction product of a polymer rubber having an unsaturated carbon chain and at least one 2-benzothiazyl sulfenamide derivative.

It is known that rubber compositions generally are combined or "compounded" with various other materials before being cured and/or put into use. Some of these added materials improve the properties of the end product in service while others improve processing properties of the uncured compositions. In some instances, both effects may be achieved. It is also known that the various chemicals, pigments and other materials so used, both organic and inorganic, can interact in various ways to produce desirable or deleterious effects. For further discussions of rubber processing and materials used therein, see, for example, *Encyclopedia of Polymer Science and Technology*, published by John Wiley and Sons, New York (1970), particularly Vol. 12, page 280 and *The Vanderbilt Rubber Handbook*, R.T. Vanderbilt Company, Norwalk, Connecticut, 06855 (1968), particularly Sections 6, 7, 8, 9 and 11.

Vulcanizing agents, plasticizers, extenders, accelerators, fillers, pigments, etc. generally are incorporated into vulcanizable rubber compositions so that the rubber can be cured or vulcanized in a mold to form useful articles. It often is necessary to include processing aids in rubber compounds prior to molding and curing. These aids are primarily intended to improve the mixing of the ingredients of the rubber compound, the processability of the rubber the mold or mill release properties of the rubber, tack and green strength without seriously adversely affecting the properties of the cured rubber.

Vulcanizing or curing agents used in vulcanizable rubbers generally are sulfur or sulfur-containing compounds or peroxide compositions. The rate of the vulcanization step generally is slow with many rubber materials unless an accelerator is incorporated into the vulcanizable mixture. A number of materials have been suggested and utilized for their accelerating effect. Such materials include metal oxides, for example, lead oxide, calcium oxide and magnesium oxide. Organic accelerators have found wide use in today's technology, and many of these are derivatives of aniline. A large portion of the organic vulcanization accelerators which are in current use are derivatives of 2-mercaptobenzothiazole (MBT). One group of MBT derivatives which has found wide acceptance includes the N-derivatives of 2-benzothiazole sulfenamide. A number of such derivatives and their use as accelerators of vulcanization are described and discussed in Vol. 20 of the Encyclopedia of Chemical Technology, Kirk-Othmer editors, Second Edition, 1983, pp. 337-363. See also U.S. Patent 2,367,827.

In order to minimize or eliminate premature curing of the rubber formulation (scorching), the vulcanizing agents and accelerators are added to the formulation just prior to the curing step. The other normally used rubber formulation additives are mixed with the base rubber compositions in, for example, a masterbatch operation, prior to contact with the sulfur and accelerator.

Carbon blacks are used in rubber formulations and vary widely as to their characteristics and combinations of characteristics. In rubber formulations, carbon black is used as a reinforcing filler. Many carbon blacks of the channel and furnace types with varying characteristics have been utilized because they impart varying desirable characteristics to the rubber.

US—A—3,007,902 describes the use of N-oxydiethylene-2-benzothiazylsulfen as sole curing agent for aliphatic 1-olefin polymers to improve the resistance of said polymers to stress cracking.

It now has been found that modified rubber compositions can be prepared which exhibit improved desirable properties such as reduced hysteresis when cured. More particularly, the uncured rubber compositions of the invention are compositions obtained by heating a mixture comprising

(a) at least one rubber having an unsaturated carbon chain, and

(b) 0.25 to 10 parts by weight of at least one 2-benzothiazyl sulfenamide derivative of the formula

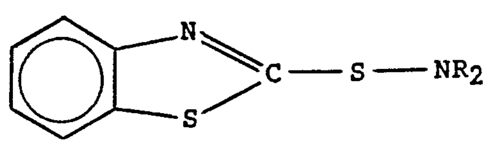

(I)

wherein each R is independently hydrogen, an alkyl, cycloalkyl or aryl group containing up to 12 carbon atoms, or both R groups may be ethylene groups whose end carbon atoms are joined together through an oxygen atom to form a morpholinyl group to a temperature of at least 140°C in the absence of conventional vulcanizing or curing agents. Preferably, the mixture also contains

(c) at least one reinforcing filler such as carbon black. The uncured rubber compositions of the invention are found to have increased green strength.

The invention also includes filled vulcanizates made by vulcanizing a composition comprising at least one of the above-described modified uncured rubber compositions and one or more reinforcing fillers normally used in rubber compounding such as carbon, silica or mixtures of carbon and silica. Rubber

articles and portions thereof made from such vulcanizates such as tires, hoses, belts, treads, sidewalls, industrial rubber articles such as engine mounts and shock absorbers, and the like are also within the scope of the present invention as well as methods of reducing the rolling resistance of tires by forming at least a part of the tread of the tire from the vulcanizate of the invention.

The rubber compositions in the first embodiment of this invention are not cured. In other words, they are not vulcanized. The uncured rubber compositions of the present invention are sulfenamide modified rubber compositions which comprise the chemical reaction product of at least one rubber having an unsaturated carbon chain, and (b) 0.25 to 10 parts by weight of at least one 2-benzothiazyl sulfenamide derivative of the formula

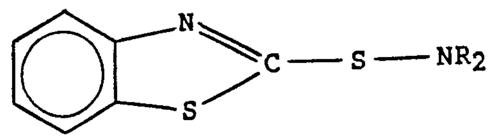 (I)

wherein each R is independently hydrogen, an alkyl or a cycloalkyl or aryl group containing up to 12 carbon atoms, or both R groups may be ethylene groups whose end carbon atoms are joined together through an oxygen atom to form a morpholinyl group to a temperature of at least 140°C in the absence of vulcanizing or curing agents. Preferably the reaction is conducted in the presence of a reinforcing filler such as carbon black.

The rubbers used herein contain carbon-carbon unsaturation in the molecular structure and these rubbers include natural as well as synthetic rubbers. The rubber compositions used in the present invention include natural rubber and rubber-like polymers produced by polymerizing aliphatic, conjugated diolefins, especially those containing 4 to 8 carbon atoms per molecule such as butadiene, isoprene, pentadienes, etc., or the copolymers of such dienes. The rubbers used in the uncured compositions of this invention have unsaturated carbon chains. That is, their polymer backbones contain a significant amount of unsaturation, in contrast to the pendant or vinyl saturation found in some other types of rubbers. Typically, the chains of such unsaturated rubbers have at least about 5% of their carbon-to-carbon bonds as unsaturated bonds. Characterization of rubber as having unsaturated carbon chains is well known in the art as shown by ANSI/ASTM Standard D 1418—79A where unsaturated-chain rubbers are referred to as R rubbers. Class R rubbers include natural rubber and various synthetic rubbers derived at least partly from diolefins. The following is a non-exclusive list of R class rubbers which can be used in the compositions of the present invention:

ABR — Acrylate-butadiene

BR — Butadiene

CIIR — Chloro-isobutene-isoprene

CR — Chloroprene

IR — Isoprene, synthetic

NBR — Nitrile-butadiene

NCR — Nitrile-chloroprene

NIR — Nitrile-isoprene

NR — Natural rubber

SBR — Styrene-butadiene

SCR — Styrene-chloroprene

SIR — Styrene-isoprene rubbers

Of these, the NR, IR, BR, SBR or mixtures of two or more of these are typically used. Many compositions are made wherein the rubber is NR, SBR or a mixture containing at least 50% of one of these. Compositions containing only NR as the rubber portion are often used. In the context of this invention, NR includes both hevea and guayule rubber as well as mixtures thereof.

The rubbers used herein having carbon-carbon unsaturation also may be other than the R rubbers such as EPDM. EPDM rubbers are derived from ethylene-propylene-diene monomer and generally about 3—8% of their carbon bonds are unsaturated bonds.

The above rubber compositions can be modified in accordance with the present invention by chemically reacting the rubber with a minor, property-improving amount of at least one 2-benzothiazyl sulfenamide derivative of the formula

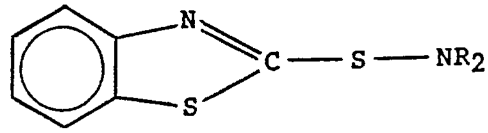

(I)

wherein each R is independently hydrogen, an alkyl cycloalkyl or aryl group containing up to 12 carbon atoms, or both R groups may be ethylene groups whose end carbon atoms are joined together through an oxygen atom to form a morpholinyl group to a temperature of at least 140°C in the absence of vulcanizing or curing agents.

Sulfenamide derivatives of the type represented by Formula I are well known compounds and have been used as accelerators for the vulcanization of rubber and rubber-like materials. It now has been found that such sulfenamide derivatives are beneficial to uncured and cured rubber compositions when the sulfenamide derivatives are reacted with rubber compositions having unsaturated carbon chains. The precise nature of the reaction or of the reaction product is not known, but the reaction product exhibits desirable characteristics when utilized in the preparation of filled vulcanizates and products from such filled vulcanizates.

Specific examples of the sulfenamides of the type represented by Formula I include those wherein each R is the same or different and wherein each R is independently e.g. hydrogen, ethyl, n-propyl, n-butyl, isobutyl, sec-butyl, tert-butyl, n-amyl, sec-amyl, tert-amyl, cyclohexyl. Specific examples of such sulfenamide derivatives include: N,N-diethyl-2-benzothiazyl-sulfenamide, N-isopropyl-2-benzothiazyl-sulfenamide, N,N-diisopropyl-2-benzothiazyl-sulfenamide, N-t-butyl-2-benzothiazyl sulfenamide, N-cyclohexyl-2-benzothiazyl-sulfenamide, and N,N-dicyclohexyl-2-benzothiazyl-sulfenamide.

The benzo portion of the sulfenamide represented by Formula I optionally may contain other substituents provided that the substituents do not interfere with the desirable reaction. The unsubstituted benzothiazyl derivatives are, however, commercially available as accelerators for vulcanization processes and are therefore preferred.

As mentioned, the uncured rubber compositions of the invention are obtained by heating a mixture of the above-described rubbers with the sulfenamide derivatives represented by Formula I to a temperature of at least about 140°C. Depending upon the nature of the rubber used in the reaction, the reaction temperature may be as high as 220°C. Generally, the reaction temperature will be in the range of from about 150 to 200°C. Although the reaction generally is conducted in the absence of any added solvent, inert solvents normally used in rubber compounding may be included in the reaction mixture to facilitate handling if desired. Examples of such solvents include toluene, xylene, cyclohexane, processing aids, etc.

The amount of the 2-benzothiazyl sulfenamide derivative included in the reaction mixture generally is a minor, property-improving amount, i.e.

0.25 up to 10 parts by weight or more per 100 parts by weight of the polymer rubber (phr). More generally, the reaction mixture will contain from about 0.5 to 5 parts by weight of the sulfenamide derivative phr.

The reaction mixture which is utilized to prepare the modified uncured polymer rubber compositions of the invention will not include conventional vulcanizing or curing agents since these would interfere with the desirable reaction of the sulfenamide derivative with the uncured rubber. In the presence of vulcanizing agents, the sulfenamide derivatives could act as accelerators and promote the vulcanization of the polymer rubber which would diminish if not prevent entirely the desirable reaction between the sulfenamide derivative and the uncured rubber.

In a preferred embodiment, the reaction between the sulfenamide derivative and the polymer rubber composition containing unsaturated carbon chains is conducted in the presence of reinforcing fillers such as carbon black or silica. Preferably, the reaction occurs in the presence of carbon black although it has been observed that the carbon black can be added to the mixture after the mixture has been preheated to a temperature of at least 140°C, and desirable results are obtained. The amount of reinforcing filler included in the reaction mixture either initially or after preheating may be varied over a wide range although the mixture generally will contain from about 30 to 100 parts of carbon black per 100 parts of rubber.

The carbon black fillers useful in this invention include any of the commonly available, commercially-produced carbon blacks but those having a surface area (EMSA) of at least 20 $m^2$/g. and more preferably at least 35 $m^2$/g. up to 200 $m^2$/g. or higher are preferred. Surface area values used in this application are those determined by ASTM test D—1765 using the cetyltrimethyl-ammonium bromide (CTAB) technique. Among the useful carbon blacks are furnace black, channel blacks and lamp blacks. More specifically, examples of the carbon blacks include super abrasion furnace (SAF) blacks, high abrasion furnace (HAF) blacks, fast extrusion furnace (FEF) blacks, fine furnace (FF) blacks, intermediate super abrasion furnace (ISAF) blacks, semi-reinforcing furnace (SRF) blacks, medium processing channel blacks, hard processing channel blacks and conducting channel blacks. Other carbon blacks which may be utilized include acetylene blacks.

Mixtures of two or more of the above blacks can be used in preparing the carbon black products of the invention. Typical values for surface areas of usable carbon blacks are summarized in the following Table I.

TABLE I

Carbon Blacks

| ASTM Designation (D-1765-82a) | Surface Area ($m^2/g$) (D-3765) |
|---|---|
| N-110 | 126 |
| N-220 | 111 |
| N-339 | 95 |
| N-330 | 83 |
| N-550 | 42 |
| N-660 | 35 |

The carbon blacks utilized in the invention may be in pelletized form or an unpelletized flocculant mass. Preferably, for more uniform mixing, unpelletized carbon black is preferred. Similar silica reinforcing agents having comparable particle sizes and thus surface areas can also be used..

The following examples illustrate the preparation of the modified uncured rubber compositions of the present invention. Unless otherwise indicated in the examples or elsewhere in the application, all parts and percentages are by weight, and the temperatures are in degrees centigrade.

Example 1

A mixture of 178.8 parts of SBR containing 47.5 parts of oil, and 1.3 parts of N-t-butyl-2-benzothiazyl sulfenamide is prepared and the mixture is heated to a temperature in excess of 150°C for a period of about six minutes. The desired product can be recovered or utilized directly in the formation of a masterbatch formulation.

Example 2

The procedure of Example 1 is repeated except that 165.0 parts of the SBR containing 45 parts of oil and 1.2 parts of the sulfenamide are used in the reaction mixture.

Example 3

A mixture of 85.25 parts of NR, 80.21 parts of SBR containing 10.46 parts of oil and 1.55 parts of N-t-butyl-2-benzothiazyl sulfenamide is prepared and heated to a temperature of about 150°C over a period of six minutes to yield the desired product.

Example 4

The procedure of Example 1 is repeated except that the sulfenamide utilized is N-cyclohexyl-2-benzothiazyl sulfenamide.

Example 5

The procedure of Example 1 is repeated except that the reaction mixture contains 81.9 parts of HAF carbon black (N—339).

Example 6

The procedure of Example 2 is repeated except that the reaction mixture contains 84 parts of HAF carbon black.

Example 7

The procedure of Example 3 is repeated except that the reaction mixture contains 85.25 parts of N—351 carbon black.

As mentioned above, the uncured modified rubber compositions of the invention such as illustrated in Examples 1—7 are useful in the preparation of filled vulcanizates which are useful in a number of applications. Thus, the uncured modified rubber compositions of the present invention generally are formulated with conventional rubber additives to form masterbatches which can then be cured by the

addition of curing agents, accelerators, etc. When the uncured modified rubber compositions of the present invention are prepared in the absence of carbon such as in Examples 1—3 above, carbon black is added to the masterbatch formulation. Alternatively, when a reinforcing filler such as carbon is included in the reaction mixture used in the preparation of the uncured modified polymer rubber compositions of the invention, such as in Examples 5—7, the addition of carbon black to the masterbatch formulation may be unnecessary if sufficient carbon black was included in the reaction mixture. If less than the desired amount of carbon black is included in the reaction mixture, then additional carbon black must be added to the masterbatch. The total amount of carbon black included will range from about 20 to 150 phr.

In addition to the reinforcing fillers, other materials normally used in conventional rubber formulations such as antioxidants, accelerators, retarders, promoters and the like may be incorporated into the compositions of the invention. Fillers (in addition to carbon black and silica) may be, and often are present as is known to those skilled in the art. Typical fillers include glass, talc and similar finely divided mineral materials.

The vulcanizable compositions (including masterbatches) containing the modified rubbers of the present invention can be prepared by conventional techniques and using various types of mills, blenders and mixers known in the art.

The temperature used in formulating the uncured rubbers of this invention range from ambient to those normally used in the art such as 75° to 175° or even higher depending upon a particular modified rubber composition being used. Because of the shear forces involved in formulating the rubber compositions, the formulation process is exothermic and high temperatures are normal.

The vulcanizates of the present invention are made by vulcanizing a mixture comprising at least one of the modified rubber compositions of the invention, fillers, conventional curing systems and agents such as sulfur, antioxidants, accelerators, retarders, coupling agents, promoters, etc. The curing agents may be conventional types such as sulfur- or peroxide-based curing systems. They are used in conventional amounts and incorporated in the uncured compositions of the invention by known techniques and procedures. The vulcanizates of this invention are prepared by curing these compositions under conditions of temperature and time customarily used in the art. Typically, the modified rubber, carbon black, other fillers and normal processing aids such as zinc oxide, stearic acid and processing oil are mixed, the sulfur and accelerators are added, and the mixture is cured. Other mixing sequences can be used, but it is preferred to have the modified rubber and carbon black product intimately combined before vulcanization.

Among the desirable and beneficial properties exhibited by the vulcanized rubber compositions of the present invention prepared with the uncured modified rubber compositions described herein are an increase in rebound, reduced hysteresis, and when utilized in treads of tires, a decrease in the rolling resistance.

The following examples illustrate the preparation of vulcanized rubber compositions in accordance with the invention utilizing the modified rubbers of the invention. Conventional rubber compounding materials, conditions, temperatures, procedures and evaluation techniques are used unless noted to the contrary.

## Example A

A masterbatch formulation is prepared utilizing the modified rubber composition of Example 5. The product of Example 5 (total amount) is mixed with conventional additives of the type and amount shown in the following Table II. The masterbatch is mixed in a Brabender under two separate sets of conditions. The first time, the jacket temperature is 140°C and mixing is for three minutes at 50 rpm. The second mixing period is at a jacket temperature of 155°C for a period of four minutes at 50 rpm. In this example, the drop temperature at the end of the first mix is 173—176°C and the drop temperature after the second mix is 183—188°C.

## Example B

A masterbatch formulation is prepared utilizing the product of Example 6 (total amount) and conventional additives in amounts as indicated in the following Table II. The masterbatch is mixed in a Brabender first at a jacket temperature of 140°C for a period of three minutes at 50 rpm, and then at a jacket temperature of 155°C for a period of four minutes at 50 rpm. The drop temperature after the first mixing period is 172—175°C, and the dropping temperature after the second mixing period is 180—182°C.

## Example C

A masterbatch formulation is prepared utilizing the product of Example 7 (entire amount) and conventional additives as identified in any amounts indicated in Table II. The masterbatches are mixed in the same manner as described in Example A. The drop temperature after the first mixing period is 184°C, and the dropping temperature at the end of the second mixing period is 185—187°C.

TABLE II

Masterbatch Formulations

| Example | A | B | C |
|---|---|---|---|
| SBR | 178.75[1] | 165.0[2] | 80.21[3] |
| NR | ------ | ------ | 74.79[3] |
| N-339 | 81.9[1] | 89.0[2] | ------ |
| N-351 | ------ | ------ | 85.25[3] |
| Processing Oil | ------ | 13.8 | 10.46 |
| Zn Oxide | 3.9 | 2.4 | 3.1 |
| Stearic Acid | 2.6 | 2.4 | 3.1 |
| Antioxidant | 3.9 | 3.6 | 6.15 |
| Sulfenamide Derivative | 1.3[1] | 1.2[2] | 1.55[3] |

1 Effective amount based on Example 5.
2 Effective amount based on Example 6.
3 Effective amount based on Example 7.

The above prepared masterbatches are characterized by increased green strength when compared to similar masterbatches wherein the rubber has not been modified with the sulfenamide.

The masterbatches prepared in Examples A, B and C milled for five minutes on a 95°C mill with sulfur and accelerators of the type and amounts indicated in the following Table III.

TABLE III

Curing Formulations

| Masterbatch Examples | A | B | C |
|---|---|---|---|
| Parts | 269 | 270 | 268 |
| Sulfur | 2.30 | 2.78 | 1.55 |
| Accelerator[1] | 2.70 | 1.20 | 3.48 |
| Accelerator[2] | --- | 0.24 | --- |
| Pre-vulcanization Inhibitor | --- | --- | 0.385 |

1 N-t-butyl-2-benzothiazyl sulfenamide.
2 2-mcrcaptobenzothiazole.

The above formulations are cured for 20 minutes at about 165°C. Some of the pertinent mechanical properties of the cured rubbers are summarized in Table IV.

TABLE IV

Cured Rubber Properties

| Cured Sample[1] | Control[2] | A | Control[3] | B | Control[4] | C |
|---|---|---|---|---|---|---|
| Rebound (%) | | | | | | |
| at 23°C | 48 | 48 | 41 | 43.5 | 38.5 | 43.5 |
| at 100°C | 66 | 69 | 57 | 62 | 69.5 | 75 |
| MTS Tan delta | | | | | | |
| at 21°C | 0.193 | 0.171 | 0.263 | 0.216 | 0.193 | 0.151 |
| at 50°C | 0.141 | 0.123 | 0.202 | 0.159 | 0.137 | 0.099 |
| at 100°C | 0.104 | 0.090 | 0.148 | 0.113 | 0.091 | 0.064 |
| Tensile Strength (23°C) | | | | | | |
| Stress at break (M Pa) | 20.6 | 21.4 | 20.8 | 21.3 | 23.0 | 23.2 |
| Elongation at break (%) | 450 | 380 | 615 | 505 | 380 | 325 |

1 Cured Samples A, B and C illustrate the invention. See Examples A, B and C and Table III.

2 Control similar to Sample A except no sulfenamide reacted with the rubber.

3 Control similar to Sample B except no sulfenamide reacted with the rubber.

4 Control similar to Sample C except no sulfenamide reacted with the rubber.

The vulcanizable and vulcanized rubber compositions of the invention resulting from the use of the rubbers modified with the sulfenamide derivatives of the invention can be molded or shaped into the desired shapes by known techniques, and they can be used for many purposes for which similar compositions are used. As illustrated above, the vulcanized rubber compositions of the invention exhibit improved mechanical properties such as reduced hysteresis (Tan delta and rebound), and when the rubbers of the invention are utilized in the preparation of tread for tires, the tires are characterized by a reduction in roll resistance of about 4 to 5%.

**Claims**

1. An uncured rubber composition obtained by heating a mixture comprising
(a) at least one rubber having an unsaturated carbon chain, and
(b) 0.25 to 10 parts by weight of at least one 2-benzothiazyl sulfenamide derivative of the formula

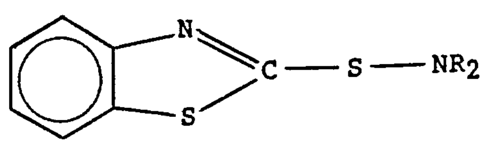

(I)

wherein each R is independently hydrogen, an alkyl, cycloalkyl or aryl group containing up to 12 carbon atoms, or both R groups may be ethylene groups whose end carbon atoms are joined together through an

oxygen atom to form a morpholinyl group to a temperature of at least 140°C in the absence of vulcanizing and curing agents.

2. The composition of claim 1 wherein the rubber is NR, IR, BR, SBR, CR, CIIR, NIR or mixtures of two or more of these.

3. The composition of claim 2 wherein the rubber is NR, SBR or a mixture containing at least 50% of one of these.

4. The composition of claim 1 wherein the mixture also contains (c) at least one reinforcing filler.

5. The composition of claim 1 wherein at least one reinforcing filler is added to the mixture after the mixture is heated to a temperature of at least about 140°C.

6. The composition of claim 1 wherein one R is an alkyl group and the other R is hydrogen.

7. The composition of claim 1 containing up to ten parts by weight of the sulfenamide derivative per 100 parts by weight of the rubber.

8. The composition of claim 3 wherein one of the fillers is carbon black.

9. A process for modifying the properties of uncured rubber compositions containing at least one rubber having unsaturated carbon backbone chains which comprises reacting the rubber composition with 0.25 to 10 parts by weight of at least one 2-benzothiazyl sulfenamide derivative of the formula

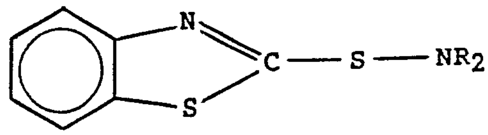

(I)

wherein each R is independently hydrogen, an alkyl, cycloalkyl or aryl group containing up to 12 carbon atoms, or both R groups may be ethylene groups whose end carbon atoms are joined together through an oxygen atom to form a morpholinyl group at a temperature of at least 140°C in the absence of vulcanizing and curing agents.

10. The process of claim 9 wherein the rubber is reacted with up to ten parts by weight of the sulfenamide derivative based on the weight of the rubber.

11. The process of claim 10 wherein the rubber is NR, IR, BR, SBR, CR, CIIR, NIR or mixtures of two or more of these.

12. The process of claim 9 wherein the rubber is NR, IR or CR and at least one reinforcing filler present.

13. The process of claim 9 wherein at least one reinforcing filler is added to the mixture after the mixture is heated to a temperature of at least 140°C.

14. The process of claim 12 wherein the rubber is NR and a carbon black filler is present.

15. The process of claim 9 wherein one R is an alkyl group and the other R is hydrogen.

16. A filled vulcanizate made by vulcanizing an uncured, modified rubber composition obtained by heating a mixture comprising

(a) at least one rubber having an unsaturated carbon chain,

(b) 0.25 to 10 parts by weight of at least one 2-benzothiazyl sulfenamide derivative of the formula

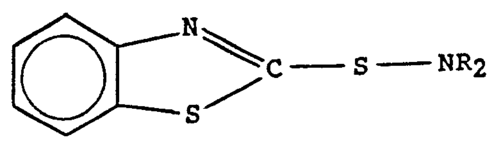

(I)

wherein each R is independently hydrogen, an alkyl, cycloalkyl or aryl group containing up to 12 carbon atoms, or both R groups may be ethylene groups whose end carbon atoms are joined together through an oxygen atom to form a morpholinyl group, and

(c) at least one reinforcing filler; to a temperature of at least 140°C.

17. The vulcanizate of claim 16 wherein the rubber is NR, IR, BR, SBR, CR, CIIR, NIR or a mixture of two or more of these.

18. The vulcanizate of claim 16 wherein the rubber is NR, SBR or a mixture containing at least 50% NR, and the filler is carbon black, silica or a mixture of these.

19. The vulcanizate of claim 16 wherein each R group is an isobutyl group.

20. The vulcanizate of claim 16 wherein the mixture contains up to ten parts by weight of the sulfenamide derivative per 100 parts of rubber.

21. A tire having at least a portion thereof made of the vulcanizate of claim 16.

22. The tire of claim 21 wherein the vulcanizate comprises NR, SBR or a mixture containing at least 50% NR, and the filler is carbon black, silica or a mixture of carbon black and silica.

23. A method of reducing the rolling resistance and running temperature of a tire which comprises making at least the tread portion of the tire from a vulcanizate of claim 16.

**Patentansprüche**

1. Ungehärtete Kautschukmasse, dadurch gekennzeichnet, daß sie durch Erhitzen eines Gemisches, enthaltend
(a) mindestens einen Kautschuk mit einer ungesättigten Kohlenstoffkette und
(b) 0,25 bis 10 Gew.-Teile mindestens eines 2-Benzothiazylsulfenamidderivats der Formel

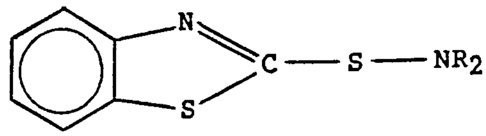 (I)

worin jedes R unabhängig für Wasserstoff, eine Alkyl-, Cycloalkyl- oder Arylgruppe mit bis zu 12 Kohlenstoffatomen steht oder beide Gruppen R Ethylengruppen sein können, deren Endkohlenstoffatome miteinander durch ein Sauerstoffatom unter Bildung einer Morpholinylgruppe verbunden sein können, bei einer Temperatur von mindestens 140°C in Abwesenheit von Vulkanisations- und Härtungsmitteln erhalten worden ist.

2. Masse nach Anspruch 1, dadurch gekennzeichnet, daß der Kautschuk NR, IR, BR, SBR, CR, CIIR, NIR oder Gemische aus zwei oder mehreren dieser Produkte ist.

3. Masse nach Anspruch 2, dadurch gekennzeichnet, daß der Kautschuk NR, SBR oder ein Gemisch, das mindestens 50% eines dieser Produkte enthält, ist.

4. Masse nach Anspruch 1, dadurch gekennzeichnet, daß das Gemisch auch (c) mindestens einen Verstärkungsfüllstoff enthält.

5. Masse nach Anspruch 1, dadurch gekennzeichnet, daß mindestens ein Verstärkungsfüllstoff zu dem Gemisch gegeben worden ist, nachdem das Gemisch auf eine Temperatur von mindestens etwa 140°C erhitzt worden ist.

6. Masse nach Anspruch 1, dadurch gekennzeichnet, daß eine Gruppe R eine Alkylgruppe ist und daß die andere Gruppe R Wasserstoff ist.

7. Masse nach Anspruch 1, dadurch gekennzeichnet, daß sie bis zu 10 Gew.-Teile des Sulfenamidderivats pro 100 Gew.-Teile Kautschuk enthält.

8. Masse nach Anspruch 3, dadurch gekennzeichnet, daß einer der Füllstoffe Ruß ist.

9. Verfahren zum Modifizieren der Eigenschaften von ungehärteten Kautschukmassen, die mindestens einen Kautschuk mit ungesättigten Kohlenstoff-Skelettketten enthalten, dadurch gekennzeichnet, daß man die Kautschukmasse mit 0,25 bis 10 Gew.-Teilen mindestens eines 2-Benzothiazylsulfenamidderivats der Formel

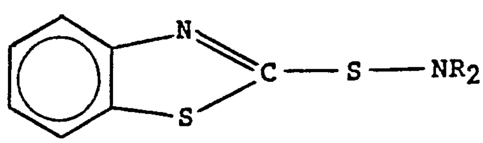 (I)

worin jedes R unabhängig für Wasserstoff, eine Alkyl-, Cycloalkyl- oder Arylgruppe mit bis zu 12 Kohlenstoffatomen steht oder beide Gruppen R Ethylengruppen sein können, deren Endkohlenstoffatome miteinander durch ein Sauerstoffatom unter Bildung einer Morpholinylgruppe verbunden sein können, bei einer Temperatur von mindestens 140°C in Abwesenheit von Vulkanisations- und Härtungsmitteln umsetzt.

10. Verfahren nach Anspruch 9, dadurch gekennzeichnet, daß man den Kautschuk mit bis zu 10 Gew.-Teilen Sulfenamidderivat, bezogen auf das Gewicht des Kautschuks, umsetzt.

11. Verfahren nach Anspruch 10, dadurch gekennzeichnet, daß der Kautschuk NR, IR, BR, SBR, CR, CIIR, NIR oder Gemische aus zwei oder mehreren dieser Produkte ist.

12. Verfahren nach Anspruch 9, dadurch gekennzeichnet, daß der Kautschuk NR, IR oder CR ist und daß mindestens ein Verstärkungsfüllstoff vorhanden ist.

13. Verfahren nach Anspruch 9, dadurch gekennzeichnet, daß mindestens ein Verstärkungsfüllstoff zu dem Gemisch gegeben wird, nachdem das Gemisch auf eine Temperatur von mindestens 140°C erhitzt worden ist.

14. Verfahren nach Anspruch 12, dadurch gekennzeichnet, daß der Kautschuk NR ist und daß ein Rußfüllstoff vorhanden ist.

15. Verfahren nach Anspruch 9, dadurch gekennzeichnet, daß eine Gruppe R eine Alkylgruppe ist und daß die andere Gruppe R Wasserstoff ist.

16. Gefülltes Vulkanisat, dadurch gekennzeichnet, daß es durch Vulkanisieren einer ungehärteten modifizierten Kautschukmasse, erhalten durch Erhitzen eines Gemisches aus
(a) mindestens einem Kautschuk mit einer ungesättigten Kohlenstoffkette und
(b) 0,25 bis 10 Gew.-Teilen mindestens eines 2-Benzothiazylsulfenamidderivats der Formel

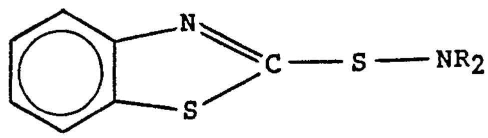

(I)

worin jedes R unabhängig für Wasserstoff, eine Alkyl-, Cycloalkyl- oder Arylgruppe mit bis zu 12 Kohlenstoffatomen steht oder beide Gruppen R Ethylengruppen sein können, deren Endkohlenstoffatome miteinander durch ein Sauerstoffatom unter Bildung einer Morpholinylgruppe verbunden sein können, und

(c) mindestens einem Verstärkungsfüllstoff, auf eine Temperatur von mindestens 140°C erhalten worden ist.

17. Vulkanisat nach Anspruch 16, dadurch gekennzeichnet, daß der Kautschuk NR, IR, BR, SBR, CR, CIIR, NIR oder Gemische aus zwei oder mehreren dieser Produkte ist.

18. Vulkanisat nach Anspruch 16, dadurch gekennzeichnet, daß der Kautschuk NR, SBR oder ein Gemisch, das mindestens 50% NR enthält, ist und daß der Füllstoff Ruß, Kieselsäure oder ein Gemisch davon ist.

19. Vulkanisat nach Anspruch 16, dadurch gekennzeichnet, daß jede Gruppe R eine Isobutylgruppe ist.

20. Vulkanisat nach Anspruch 16, dadurch gekennzeichnet, daß das Gemisch bis zu 10 Gew.-Teile Sulfenamidderivat pro 100 Teile Kautschuk enthält.

21. Reifen, dadurch gekennzeichnet, daß mindestens ein Teil davon aus dem Vulkanisat nach Anspruch 16 hergestellt worden ist.

22. Reifen nach Anspruch 21, dadurch gekennzeichnet, daß das Vulkanisat NR, SBR oder ein Gemisch, das mindestens 50% NR enthält, ist und daß der Füllstoff Ruß, Kieselsäure oder ein Gemisch aus Ruß und Kieselsäure ist.

23. Verfahren zur Verminderung des Rollwiderstands und der Lauftemperatur eines Reifens, dadurch gekennzeichnet, daß man mindestens den Laufteil des Reifens aus einem Vulkanisat nach Anspruch 16 herstellt.

**Revendications**

1. Composition de caoutchouc non vulcanisé obtenue par chauffage d'un mélange comprenant

(a) au moins un caoutchouc ayant une chaîne carbonée non saturée et

(b) 0,25 à 10 parties en poids d'au moins un dérivé 2-benzothiazylique de sulfénamide de formule

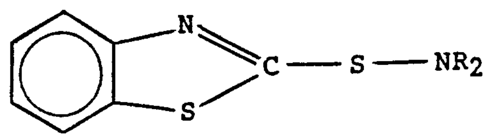

(I)

dans laquelle chaque R représente, indépendamment, l'hydrogène, un groupe alkyle, cycloalkyle ou aryle contenant jusqu'à 12 atomes de carbone, ou bien les deux groupes R peuvent être des groupes éthylène dont les atomes extrêmes de carbone sont reliés ensemble par l'intermédiaire d'un atome d'oxygène pour former un groupe morpholinyle, à une température d'au moins 140°C en l'absence d'agents de vulcanisation et de maturation.

2. Composition suivant la revendication 1, dans laquelle le caoutchouc est un caoutchouc NR, IR, BR, SBR, CR, CIIR, NIR ou des mélanges de deux ou plus de deux de ces caoutchoucs.

3. Composition suivant la revendication 2, dans laquelle le caoutchouc est un caoutchouc NR, SBR ou un mélange contenant au moins 50% de l'un de ces caoutchoucs.

4. Composition suivant la revendication 1, dans laquelle le mélange contient aussi (c) au moins une charge de renforcement.

5. Composition suivant la revendication 1, dans laquelle au moins une charge de renforcement est ajoutée au mélange après que ce dernier a été chauffé à une température d'au moins environ 140°C.

6. Composition suivant la revendication 1, dans laquelle l'un des groupes R est un groupe alkyle et l'autre est un atome d'hydrogène.

7. Composition suivant la revendication 1, contenant jusqu'à dix parties en poids du dérivé de sulfénamide pour 100 parties en poids du caoutchouc.

8. Composition suivant la revendication 3, dans laquelle l'une des charges est le noir de carbone.

9. Procédé de modification des propriétés de compositions de caoutchoucs non vulcanisés contenant au moins un caoutchouc ayant des chaînes structurales carbonées non saturées, qui consiste à faire réagir la composition de caoutchouc avec 0,25 à 10 parties en poids d'au moins un dérivé 2-benzothiazylique de sulfénamide de formule

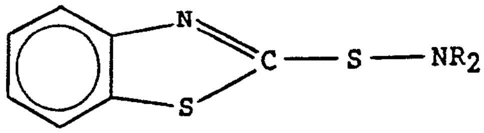

(I)

dans laquelle chaque R représente, indépendamment, l'hydrogène, un groupe alkyle, cycloalkyle ou aryle contenant jusqu'à 12 atomes de carbone, ou bien les deux groupes R peuvent être des groupes éthylène dont les atomes extrêmes de carbone sont reliés ensemble par l'intermédiaire d'un atome d'oxygène pour former un groupe morpholinyle, à une température d'au moins 140°C en l'absence d'agents de vulcanisation et de maturation.

10. Procédé suivant la revendication 9, dans lequel le caoutchouc est amené à réagir avec jusqu'à dix parties en poids du dérivé de sulfénamide sur la base du poids du caoutchouc.

11. Procédé suivant la revendication 10, dans lequel le caoutchouc est un caoutchouc NR, IR, BR, SBR, CR, CIIR, NIR ou des mélanges de deux ou plus de deux de ces caoutchoucs.

12. Procédé suivant la revendication 9, dans lequel le caoutchouc est un caoutchouc NR, IR ou CR et au moins une charge de renforcement est présente.

13. Procédé suivant la revendication 9, dans lequel au moins une charge de renforcement est ajoutée au mélange après que ce dernier a été chauffé à une température d'au moins 140°C.

14. Procédé suivant la revendication 12, dans lequel le caoutchouc est le caoutchouc NR et une charge de noir de carbone est présente.

15. Procédé suivant la revendication 9, dans lequel l'un des groupes R est un groupe alkyle et l'autre est un atome d'hydrogène.

16. Vulcanisat additionné d'une charge, préparé par vulcanisation d'une composition de caoutchouc modifié non vulcanisé obtenue par chauffage d'un mélange comprenant

(a) au moins un caoutchouc ayant une chaîne carbonée non saturée,

(b) 0,25 à 10 parties en poids d'au moins un dérivé 2-benzothiazylique de sulfénamide de formule

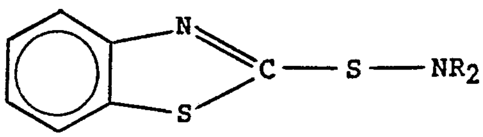

(I)

dans laquelle chaque R représente, indépendamment, l'hydrogène, un groupe alkyle, cycloalkyle ou aryle contenant jusqu'à 12 atomes de carbone, ou bien les deux groupes R peuvent être des groupes éthylène dont les atomes extrêmes de carbone sont reliés ensemble par l'intermédiaire d'un atome d'oxygène pour former un groupe morpholinyle, et

(c) au moins une charge de renforcement, à une température d'au moins 140°C.

17. Vulcanisat suivant la revendication 16, dans lequel le caoutchouc est un caoutchouc NR, IR, BR, SBR, CR, CIIR, NIR ou un mélange de deux ou plus de deux de ces caoutchoucs.

18. Vulcanisat suivant la revendication 16, dans lequel le caoutchouc est un caoutchouc NR, SBR ou un mélange contenant au moins 50% de NR, et la charge est du noir de carbone, de la silice ou un mélange des deux.

19. Vulcanisat suivant la revendication 16, dans lequel chaque groupe R est un groupe isobutyle.

20. Vulcanisat suivant la revendication 16, dans lequel le mélange contient jusqu'à dix parties en poids du dérivé de sulfénamide pour 100 parties de caoutchouc.

21. Bandage pneumatique dont au moins une partie est constituée du vulcanisat suivant la revendication 16.

22. Bandage pneumatique suivant la revendication 21, dans lequel le vulcanisat comprend du caoutchouc NR, SBR ou un mélange contenant au moins 50% de caoutchouc NR, et la charge est du noir de carbone, de la silice ou un mélange de noir de carbone et de silice.

23. Procédé pour réduire la résistance au roulement et la température de service d'un bandage pneumatique, qui consiste à réaliser au moins la portion constituant la chape du bandage en un vulcanisat suivant la revendication 16.